# FASCICULE DE BREVET EUROPEEN

(11) **EP 0 521 759 B1**
(45) Date de publication et mention de la délivrance du brevet: **15.03.1995**
(21) Numéro de dépôt: 92401830.2
(22) Date de dépôt: 29.06.1992
(51) Int. Cl.: B64C 27/00, B64C 27/72

(54) **Procédé et dispositif pour la réduction des oscillations à caractère divergent du fuselage d'un hélicoptère**
Verfahren und Vorrichtung um die divergierenden Schwingungen eines Hubschrauberrumpfes zu verringern
Method and device to reduce the divergent oscillations of a helicopter fuselage

(30) Priorité: 02.07.1991 FR 9108224
(43) Date de publication de la demande: 07.01.1993
(73) Titulaire: EUROCOPTER FRANCE, F-13725 Marignane Cédex (FR)
(72) Inventeur: Mouille, René Louis, F-13100 Aix en Provence (FR); Roesch, Philippe, F-13100 Aix en Provence (FR)
(74) Mandataire: Bonnetat, Christian

(56) Documents cités:
- DE-A- 2 736 409
- US-A- 3 954 229
- US-A- 4 819 182

## Description

La présente invention concerne un procédé et un dispositif pour la réduction des oscillations à caractère divergent du fuselage d'un hélicoptère.

On sait que, lorsque le rotor d'un hélicoptère est en rotation, le fuselage de celui-ci peut être soumis, pour certaines vitesses angulaires de rotor, à des oscillations basses fréquences qui peuvent être violentes et divergentes lorsque l'appareil est au sol ou encore, mais plus rarement, en vol. On sait de plus que ce phénomène résulte d'un couplage entre le mouvement vibratoire en traînée des pales du rotor et les mouvements du fuselage. En effet, le mouvement vibratoire en traînée des pales induit dans le fuselage des forces longitudinales et latérales, qui, à leur tour, provoquent des déplacements de la tête du rotor, augmentant le mouvement de traînée des pales du rotor.

Lorsque l'hélicoptère repose par son train sur le sol, rotor en rotation, le phénomène ci-dessus devient instable lorsque la pulsation propre du fuselage au sol est voisine de la différence Ω-ωδ entre la pulsation du rotor Ω et la pulsation propre ωδ du premier mode naturel de vibration en traînée des pales. Cette instabilité est désignée par "résonance sol".

Lorsque l'hélicoptère est en vol, l'action du train disparaît et la pulsation propre du fuselage correspond à celle du mouvement pendulaire de l'hélicoptère suspendu sous le rotor. L'instabilité peut à nouveau apparaître, mais elle nécessite alors une différence Ω-ωδ plus faible, puisque les fréquences du fuselage de l'hélicoptère sont plus basses en vol qu'au sol. Cette instabilité est désignée par "résonance air".

Cependant, qu'il soit au sol ou en vol, l'hélicoptère risque d'être endommagé ou détruit, si la condition d'instabilité Ω-ωδ est atteinte.

Pour éviter cet inconvénient, il est usuel de monter des amortisseurs sur les atterrisseurs et/ou de prévoir sur la tête de rotor des amortisseurs de traînée des pales, comme cela est par exemple décrit dans les brevets FR-A-936 775, FR-A-2 063 969 et FR-A-2 592 696. Toutefois, l'installation de tels amortisseurs sur la tête de rotor conduit à une complication certaine de celle-ci et à un supplément de masse et de prix de revient. De plus, sur les hélicoptères modernes et rapides, ces amortisseurs gênent la réalisation d'un carénage efficace de la tête de rotor, de sorte que la traînée aérodynamique de cette dernière reste élevée et réduit les performances.

Un autre moyen connu pour réduire ou supprimer les phénomènes de résonance sol et de résonance air est décrit dans le brevet US-A-4 073 600.

Dans ce cas, le basculement du rotor à la fréquence Ω-ωδ dans les axes fixes génère un signal à la même fréquence dont la transmission de façon hydraulique produit des déplacements correctifs dans la tringlerie de manoeuvre du plateau cyclique, en série ou en parallèle avec la commande pilotée. Il en résulte, alors, une modification du positionnement des pales, autour de leur articulation de pas respective dont l'axe est parallèle à l'envergure de la pale, et, par suite, une modification du torseur tournant des efforts et moments créés par le rotor de manière à s'opposer favorablement aux excitations résultant du torseur tournant initial.

Cependant, un tel moyen ne peut s'appliquer qu'à un rotor articulé sur un moyeu par un joint de type cardan disposé sur l'extrémité supérieure du mât.

Il en résulte donc une complication mécanique de l'hélicoptère et une application limitée pratiquement à la mise en oeuvre de rotors quadripales à moyeu oscillant.

La présente invention a pour but de traiter les problèmes de la résonance sol et de la résonance air, sans introduire les inconvénients précédemment mentionnés.

A cette fin, selon l'invention, le procédé pour la réduction des oscillations à caractère divergent induites dans le fuselage d'un hélicoptère par sa voilure tournante en rotation, ledit hélicoptère reposant sur le sol par l'intermédiaire de son atterrisseur, est remarquable en ce que :
- on détecte les mouvements de roulis, au sol, du fuselage dudit hélicoptère et on engendre un signal de détection représentatif desdits mouvements de roulis au sol ;
- à partir dudit signal de détection représentatif des mouvements de roulis au sol, on forme, à bord dudit hélicoptère, un signal de contrôle du roulis au sol dont la fréquence est identique à celle dudit signal de détection représentatif des mouvements de roulis au sol ;
- on applique ledit signal de contrôle du roulis au sol à au moins un premier actionneur disposé dans la chaîne cinématique de commande du pas cyclique des pales de ladite voilure tournante ; et
- la phase et l'amplitude dudit signal de contrôle du roulis au sol sont telles que l'action dudit premier actionneur sur ledit pas cyclique résulte en l'apparition d'un ensemble de forces et de moments engendrés par la voilure tournante et s'opposant, en roulis et au sol, à l'effet desdites oscillations à caractère divergent sur le fuselage.

Ainsi, grâce à la manoeuvre du plateau cyclique, on engendre sur la tête du rotor un torseur tournant, résultant des efforts et des moments créés sur les pales, en opposition permanente à l'effet du torseur tournant d'excitation résultant des efforts et des moments créés par les oscillations libres des pales en traînée.

De préférence, afin d'éliminer également les oscillations divergentes induites en tangage, au sol, dans le fuselage de l'hélicoptère par sa voilure tournante, le procédé selon l'invention est remarquable en ce que, de plus :
- on détecte les mouvements de tangage, au sol, du fuselage dudit hélicoptère et on engendre un signal de détection représentatif desdits mouvements de tangage au sol ;
- à partir dudit signal de détection représentatif des mouvements de tangage au sol, on forme, à bord dudit hélicoptère, un signal de contrôle du tangage au sol dont la fréquence est identique à celle dudit signal de détection représentatif des mouvements de tangage au sol ;
- on applique ledit signal de contrôle du tangage au sol à au moins un second actionneur disposé dans la chaîne cinématique de commande du pas cyclique des pales de ladite voilure tournante ; et
- la phase et l'amplitude dudit signal de contrôle du tangage au sol sont telles que l'action dudit second actionneur sur ledit pas cyclique résulte en l'apparition d'un ensemble de forces et de moments engendrés par la voilure tournante et s'opposant, en tangage et au sol, à l'effet desdites oscillations à caractère divergent sur le fuselage.

De même, le procédé de l'invention peut être mis en oeuvre pour la réduction des oscillations induites dans le fuselage d'un hélicoptère par sa voilure tournante en rotation, lorsque ledit hélicoptère est en vol, suspendu à ladite voilure tournante.

Dans ce cas, lorsque l'on veut réduire lesdites oscillations en roulis, ce procédé selon lequel :
a) on détecte les mouvements oscillatoires du fuselage dudit hélicoptère en vol et on engendre au moins un signal de détection représentatif desdits mouvements oscillatoires en vol ;
b) à partir dudit signal de détection représentatif des mouvements oscillatoires en vol, on forme, à bord dudit hélicoptère, un signal de contrôle des oscillations en vol dont la fréquence est identique à celle dudit signal de détection représentatif desdits mouvements oscillatoires en vol ; et
c) on applique ledit signal de contrôle des oscillations en vol à au moins un premier organe d'actionnement destiné par son action à contrecarrer lesdites oscillations induites,
est remarquable en ce que :
- dans l'opération a), on détecte les mouvements oscillatoires de roulis dudit fuselage et on engendre un signal de détection représentatif desdits mouvements oscillatoires de roulis en vol, de sorte que, dans l'opération b), ledit signal de contrôle des oscillations en vol est un signal de contrôle de roulis en vol ;
- dans l'opération c), ledit premier organe d'actionnement est disposé dans la chaîne cinématique de commande du pas cyclique des pales de ladite voilure tournante ; et
- la phase et l'amplitude dudit signal de contrôle de roulis en vol sont telles que l'action dudit premier organe d'actionnement sur ledit pas cyclique résulte en l'apparition d'un ensemble de forces et de moments engendrés par la voilure tournante et s'opposant, en roulis et en vol, à l'effet desdites oscillations à caractère divergent sur le fuselage.

Là encore, lorsqu'une réduction des oscillations en tangage est nécessaire, le procédé est remarquable en ce que, de plus :
- on détecte les mouvements oscillatoires de tangage du fuselage en vol et on engendre un signal de détection représentatif desdits mouvements oscillatoires de tangage en vol ;
- à partir dudit signal de détection représentatif des mouvements oscillatoires de tangage en vol, on forme, à bord dudit hélicoptère, un signal de contrôle du tangage en vol dont la fréquence est identique à celle dudit signal de détection représentatif des mouvements oscillatoires de tangage en vol ;
- on applique ledit signal de contrôle du tangage en vol à au moins un second organe d'actionnement disposé dans la chaîne cinématique de commande du pas cyclique des pales de ladite voilure tournante ; et
- la phase et l'amplitude dudit signal de contrôle du tangage en vol sont telles que l'action dudit second organe d'actionnement sur ledit pas cyclique résulte en l'apparition d'un ensemble de forces et de moments engendrés par la voilure tournante et s'opposant, en tangage et en vol, à l'effet desdites oscillations à caractère divergent sur le fuselage.

La présente invention concerne également un dispositif pour la réduction des oscillations à caractère divergent induites dans le fuselage d'un hélicoptère par sa voilure tournante en rotation, ledit hélicoptère reposant sur le sol par l'intermédiaire de son atterrisseur.

Dans le cas où la réduction des oscillations de roulis est suffisante, ce dispositif comporte :
- des moyens pour détecter les mouvements de roulis, au sol, du fuselage dudit hélicoptère et pour engendrer un signal de détection représentatif desdits mouvements de roulis au sol ;
- des moyens disposés à bord dudit hélicoptère et engendrant, à partir dudit signal de détection représentatif des mouvements de roulis au sol, un signal de contrôle du roulis au sol dont la fréquence est identique à celle dudit signal de détection représentatif des mouvements de roulis au sol ; et
- au moins un premier actionneur auquel est appliqué ledit signal de contrôle du roulis au sol et qui est disposé dans la chaîne cinématique de commande du pas cyclique des pales de la voilure tournante ;
- la phase et l'amplitude dudit signal de contrôle du roulis au sol étant telles que l'action dudit premier actionneur sur ledit pas cyclique résulte en l'apparition d'un ensemble de forces et de moments engendrés par la voilure tournante et s'opposant, en roulis et au sol, à l'effet desdites oscillations à caractère divergent sur le fuselage.

Si l'on veut également réduire les oscillations de tangage, ce dispositif comporte de plus :
- des moyens pour détecter les mouvements de tangage, au sol, du fuselage dudit hélicoptère et pour engendrer un signal de détection représentatif desdits mouvements de tangage au sol ;
- des moyens disposés à bord dudit hélicoptère et engendrant, à partir dudit signal de détection représentatif des mouvements de tangage au sol, un signal de contrôle du tangage au sol dont la fréquence est identique à celle dudit signal de détection représentatif des mouvements de tangage au sol ; et
- au moins un second actionneur auquel est appliqué ledit signal de contrôle du tangage au sol et qui est disposé dans la chaîne cinématique de commande du pas cyclique des pales de la voilure tournante ;
- la phase et l'amplitude dudit signal de contrôle du tangage au sol étant telles que l'action dudit second actionneur sur ledit pas cyclique résulte en l'apparition d'un ensemble de forces et de moments engendrés par la voilure tournante et s'opposant, en tangage et au sol, à l'effet desdites oscillations à caractère divergent sur le fuselage.

Dans ce dispositif, lesdits premier et second actionneurs peuvent être rassemblés dans un même ensemble fonctionnel.

De plus, l'invention concerne un dispositif pour la réduction des oscillations induites dans le fuselage d'un hélicoptère par sa voilure tournante en rotation, lorsque ledit hélicoptère en vol est suspendu à ladite voilure tournante, ce dispositif étant du type comportant :
a′) des moyens pour détecter les mouvements oscillatoires du fuselage dudit hélicoptère en vol et pour engendrer un signal de détection représentatif desdits mouvements oscillatoires en vol ;
b′) des moyens disposés à bord dudit hélicoptère et engendrant, à partir dudit signal de détection représentatif des mouvements oscillatoires en vol, un signal de contrôle des oscillations en vol dont la fréquence est identique à celle dudit signal de détection représentatif desdits mouvements oscillatoires en vol ; et
c′) un premier organe d'actionnement destiné par son action à contrecarrer lesdites oscillations induites et auquel est appliqué ledit signal de contrôle des oscillations en vol.

Selon l'invention, ce dispositif est remarquable en ce que :
- les moyens spécifiés sous a′) détectent les mouvements oscillatoires de roulis dudit fuselage et engendrent un signal de détection représentatif desdits mouvements oscillatoires de roulis en vol, de sorte que ledit signal de contrôle des oscillations en vol spécifié sous b′) est un signal de contrôle de roulis en vol ;
- ledit premier organe d'actionnement est disposé dans la chaîne cinématique de commande du pas cyclique des pales de ladite voilure tournante ; et
- la phase et l'amplitude dudit signal de contrôle de roulis en vol sont telles que l'action dudit premier organe d'actionnement sur ledit pas cyclique résulte en l'apparition d'un ensemble de forces et de moments engendrés par la voilure tournante et s'opposant, en roulis et en vol, à l'effet desdites oscillations à caractère divergent sur le fuselage.

Il est avantageux que, pour réduire les oscillations de tangage, ce dispositif comporte de plus :
- des moyens pour détecter les mouvements oscillatoires de tangage du fuselage en vol et pour engendrer un signal de détection représentatif desdits mouvements oscillatoires de tangage en vol ;
- des moyens disposés à bord dudit hélicoptère et engendrant, à partir dudit signal de détection représentatif des mouvements oscillatoires de tangage en vol, un signal de contrôle du tangage en vol dont la fréquence est identique à celle dudit signal de détection représentatif des mouvements oscillatoires de tangage en vol ; et
- au moins un second organe d'actionnement auquel est appliqué ledit signal de contrôle du tangage en vol et qui est disposé dans la chaîne cinématique de commande du pas cyclique des pales de ladite voilure tournante ;
- la phase et l'amplitude dudit signal de contrôle du tangage en vol étant telles que l'action dudit second organe d'actionnement sur ledit pas cyclique résulte en l'apparition d'un ensemble de forces et de moments engendrés par ladite voilure tournante et s'opposant, en tangage et en vol, à l'effet desdites oscillations à caractère divergent sur le fuselage.

Lesdits premier et second organes d'actionnement peuvent être rassemblés dans un même ensemble fonctionnel ; éventuellement, celui-ci peut également comprendre lesdits premier et second actionneurs mentionnés ci-dessus.

Les figures du dessin annexé feront bien comprendre comment l'invention peut être réalisée. Sur ces figures, des références identiques désignent des éléments semblables.

La figure 1 montre, schématiquement et en perspective, un hélicoptère conforme à la présente invention.

Les figures 2 et 3 illustrent, schématiquement et de façon simplifiée, des variantes de réalisation de la figure 1.

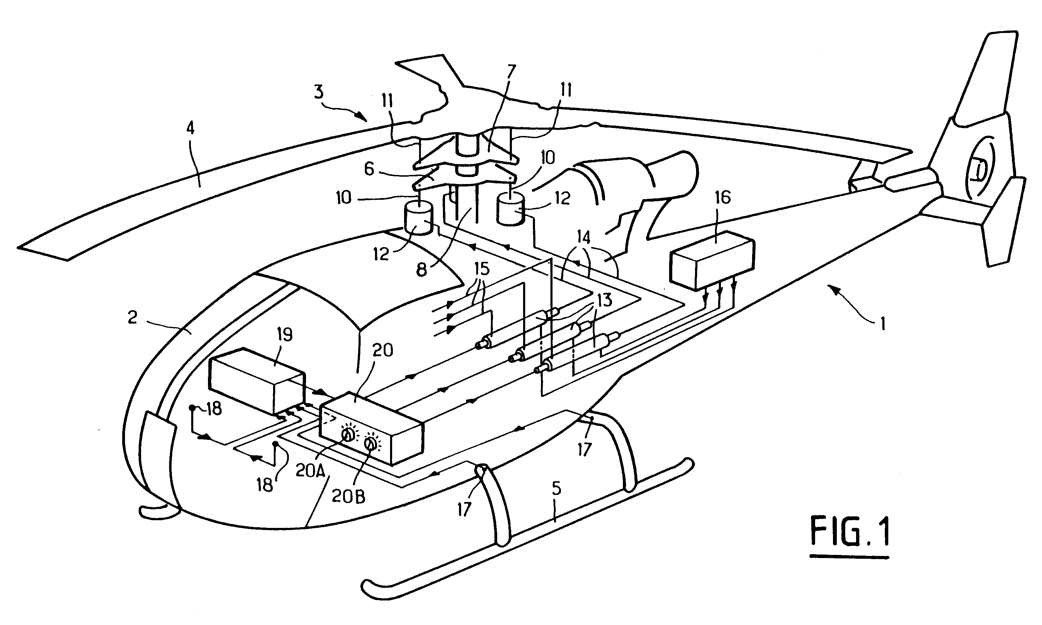

L'hélicoptère 1, conforme à la présente invention et schématiquement représenté en perspective sur la figure 1, comporte un fuselage 2 et une voilure tournante 3, comportant des pales 4. Un atterrisseur 5, solidaire du fuselage 2, est prévu pour le repos de l'hélicoptère 1 sur une aire d'envol ou d'atterrissage, désignée de façon générale dans la présente description par "sol".

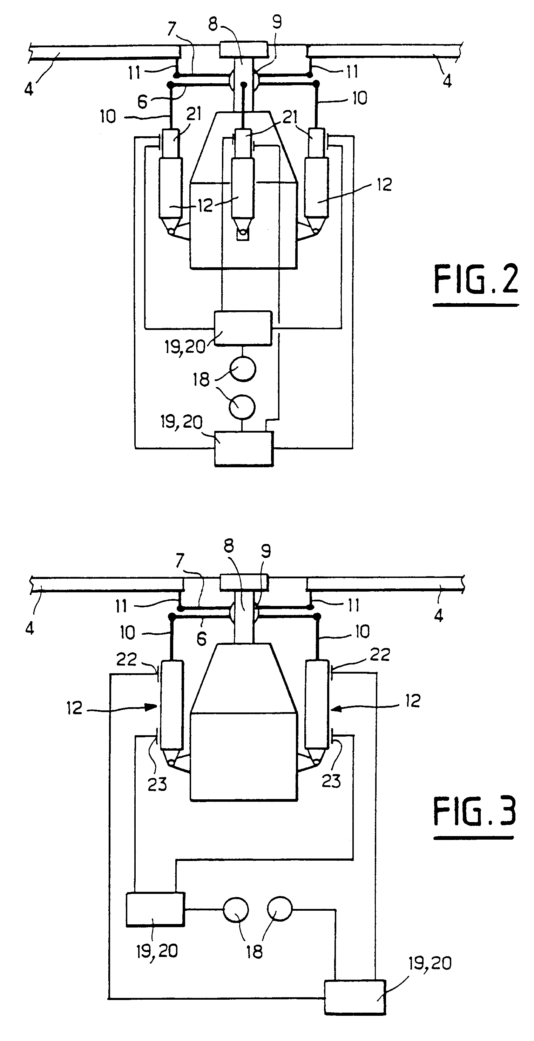

De façon connue, l'hélicoptère 1 comporte un plateau cyclique constitué d'un plateau non tournant 6 par rapport auquel peut tourner un plateau tournant 7. Le plateau non tournant 6, non seulement peut coulisser le long du mât 8 de la voilure tournante 3, mais encore peut osciller dans tous les sens autour dudit mât, grâce à une rotule 9 (non représentée sur la figure 1 mais visible sur les figures 2 et 3). La position et l'orientation du plateau non tournant 6 sont commandées par des bielles de commande 10, tandis que le pas des pales 4 est commandé par des biellettes de pas 11 reliées audit plateau tournant 7. Chaque bielle de commande 10 est commandée, en translation parallèle à son axe, par une servocommande 12. Dans l'exemple représenté sur la figure 1, chaque servocommande 12 est elle-même commandée par un actionneur 13 par l'intermédiaire d'une tringlerie 14, l'actionneur 13 recevant des ordres du pilote ou du pilote automatique par l'intermédiaire de liaisons 15. Les actionneurs 13, qui sont par exemple des vérins électriques, sont alimentés par une source d'énergie 16.

L'application de la présente invention à une commande du pas des pales par plateau cyclique est donnée à titre descriptif mais n'est pas limitative. Par exemple, elle peut également être utilisée si la commande du pas des pales se fait au moyen d'un dispositif connu, en général,'sous le nom d'"araignée".

Conformément à l'invention, l'hélicoptère 1 comporte des détecteurs 17 d'oscillations de roulis et de tangage au sol, ainsi que des détecteurs 18 d'oscillations de roulis et de tangage en vol.

Les détecteurs 17 peuvent être de simples potentiomètres mesurant les déformations ou les mouvements de l'atterrisseur 5, lorsque l'hélicoptère 1 repose sur le sol et que sa voilure tournante 3 est en rotation. Ils peuvent également être constitués par des détecteurs d'assiettes ou des gyromètres, très souvent installés à bord de l'hélicoptère 1 pour les besoins du vol IFR et du pilote automatique, ou encore par des accéléromètres mesurant des accélérations longitudinales et/ou latérales du fuselage.

Les détecteurs 18 peuvent être constitués, à titre d'exemple, par des détecteurs d'assiettes ou des gyromètres. Le cas échéant, les détecteurs 17 peuvent être supprimés, leur rôle étant joué par les détecteurs 18. De préférence, pour des raisons de fiabilité, il est important de prévoir au moins deux détecteurs 17 et/ou 18.

Les signaux oscillatoires issus des détecteurs 17 et 18, respectivement représentatifs des oscillations de résonance sol et de résonance air, sont transmis à un dispositif de détection, de filtrage et d'amplification 19, qui les adresse à un dispositif de traitement 20, commandant les actionneurs 13 en parallèle avec les liaisons 15.

Ainsi, les signaux issus des détecteurs 17 et 18 peuvent commander le pas des pales 4, à travers les actionneurs 13, les tringleries 14, les servocommandes 12, les bielles de commande 10, le plateau cyclique 6,7 et les biellettes de pas 11.

L'amplitude et la phase des signaux détectés par les détecteurs 17 et 18 sont ajustées par le dispositif de traitement 20, de telle sorte qu'il en résulte des mouvements d'assiettes du plateau cyclique 6,7 (et donc une variation du pas des pales 4), à la fréquence des oscillations desdits signaux détectés, pour réduire, puis supprimer les oscillations en roulis et en tangage induites par ladite voilure tournante dans le fuselage 2.

Le dispositif de traitement 20 est pourvu de moyens de réglage 20A,20B à la disposition de l'équipage de l'hélicoptère 1, pour permettre d'ajuster l'amplitude et/ou la phase des signaux provenant des détecteurs 17 et 18, afin de parfaire l'élimination des oscillations induites par la voilure tournante 3 dans le fuselage 2. Il est évident que ces réglages sont susceptibles d'être également réalisés grâce à un automatisme approprié.

Outre une pluralité souhaitable de détecteurs 17 et 18 comme mentionnés précédemment, l'architecture du dispositif peut comprendre au moins une duplication de certains éléments constitutifs pour garantir la sécurité de l'hélicoptère.

Dans la variante de réalisation schématique de la figure 2, on retrouve les pales 4, les plateaux 6 et 7, le mât 8, la rotule 9, les bielles de commande 10, les biellettes de pas 11, les servocommandes 12, les détecteurs 18 et les dispositifs 19 et 20 (regroupés en un seul dispositif 19,20). Un dispositif 19,20 est associé à chaque détecteur 18. Dans cette variante, on prévoit des servocommandes additionnelles 21, par exemple hydrauliques à servovalves à entrées électro-hydrauliques, dont chacune d'elles est montée en série avec une servocommande principale 12. Les servocommandes additionnelles 21 reçoivent directement les signaux électriques issus du dispositif 20 correspondant. Ainsi, dans ce cas, la variation cyclique de pas nécessaire au pilotage est engendrée par les servocommandes principales 12 (par exemple commandées comme il est décrit en regard de la figure 1), tandis que la variation de pas destinée selon l'invention à la réduction des oscillations induites par la voilure tournante dans le fuselage résulte de l'action des servocommandes additionnelles 21.

La figure 3 illustre, à la manière de la figure 2, une variante simplifiée du dispositif selon l'invention, ne permettant que la réduction des oscillations du fuselage en roulis. Cette variante comporte deux servocommandes hydrauliques principales 12, chacune à deux entrées électriques par servovalves 22,23, lesdites servocommandes principales 12 étant diamétralement opposées par rapport au mât 8. Pour chaque servocommande 12, l'entrée 22 reçoit le signal électrique provenant d'un dispositif 20 associé à un détecteur 18, tandis que l'entrée 23 reçoit le signal provenant d'un dispositif 20 associé à un autre détecteur 18. Ainsi, on peut faire osciller le plateau cyclique 6,7 latéralement en opposition avec les oscillations induites. Bien entendu, les servocommandes 12 sont par ailleurs commandables (de façon non représentée) par le pilote ou le pilote automatique.

## Revendications

1. Procédé pour la réduction des oscillations à caractère divergent induites dans le fuselage (2) d'un hélicoptère (1) par sa voilure tournante (3) en rotation, ledit hélicoptère reposant sur le sol par l'intermédiaire de son atterrisseur (5),
caractérisé en ce que :
- on détecte (en 17,18) les mouvements de roulis, au sol, du fuselage dudit hélicoptère et on engendre un signal de détection représentatif desdits mouvements de roulis au sol ;
- à partir dudit signal de détection représentatif des mouvements de roulis au sol, on forme (en 20), à bord dudit hélicoptère, un signal de contrôle du roulis au sol dont la fréquence est identique à celle dudit signal de détection représentatif des mouvements de roulis au sol ;
- on applique ledit signal de contrôle du roulis au sol à au moins un premier actionneur (13,12,21) disposé dans la chaîne cinématique de commande du pas cyclique des pales (4) de ladite voilure tournante (3) ; et
- la phase et l'amplitude dudit signal de contrôle du roulis au sol sont telles que l'action dudit premier actionneur sur ledit pas cyclique résulte en l'apparition d'un ensemble de forces et de moments engendrés par la voilure tournante et s'opposant, en roulis et au sol, à l'effet desdites oscillations à caractère divergent sur le fuselage.

2. Procédé selon la revendication 1,
caractérisé en ce que, de plus :
- on détecte les mouvements de tangage, au sol, du fuselage dudit hélicoptère et on engendre un signal de détection représentatif desdits mouvements de tangage au sol ;
- à partir dudit signal de détection représentatif des mouvements de tangage au sol, on forme, à bord dudit hélicoptère, un signal de contrôle du tangage au sol dont la fréquence est identique à celle dudit signal de détection représentatif des mouvements de tangage au sol ;
- on applique ledit signal de contrôle du tangage au sol à au moins un second actionneur disposé dans la chaîne cinématique de commande du pas cyclique des pales de ladite voilure tournante ; et
- la phase et l'amplitude dudit signal de contrôle du tangage au sol sont telles que l'action dudit second actionneur sur ledit pas cyclique résulte en l'apparition d'un ensemble de forces et de moments engendrés par la voilure tournante et s'opposant, en tangage et au sol, à l'effet desdites oscillations à caractère divergent sur le fuselage.

3. Procédé pour la réduction des oscillations induites dans le fuselage d'un hélicoptère par sa voilure tournante en rotation, ledit hélicoptère étant suspendu audit rotor, procédé selon lequel :
a) on détecte les mouvements oscillatoires du fuselage dudit hélicoptère en vol et on engendre au moins un signal de détection représentatif desdits mouvements oscillatoires en vol ;
b) à partir dudit signal de détection représentatif des mouvements oscillatoires en vol, on forme, à bord dudit hélicoptère, un signal de contrôle des oscillations en vol dont la fréquence est identique à celle dudit signal de détection représentatif desdits mouvements oscillatoires en vol ; et
c) on applique ledit signal de contrôle des oscillations en vol à au moins un premier organe d'actionnement destiné par son action à contrecarrer lesdites oscillations induites,
caractérisé en ce que :
- dans l'opération a), on détecte les mouvements oscillatoires de roulis dudit fuselage et on engendre un signal de détection représentatif desdits mouvements oscillatoires de roulis en vol, de sorte que, dans l'opération b), ledit signal de contrôle des oscillations en vol est un signal de contrôle de roulis en vol ;
- dans l'opération c), ledit premier organe d'actionnement est disposé dans-la chaîne cinématique de commande du pas cyclique des pales de ladite voilure tournante ; et
- la phase et l'amplitude dudit signal de contrôle de roulis en vol sont telles que l'action dudit premier organe d'actionnement sur ledit pas cyclique résulte en l'apparition d'un ensemble de forces et de moments engendrés par la voilure tournante et s'opposant, en roulis et en vol, à l'effet desdites oscillations à caractère divergent sur le fuselage.

4. Procédé selon la revendication 3,
caractérisé en ce que, de plus :
- on détecte les mouvements oscillatoires de tangage du fuselage en vol et on engendre un signal de détection représentatif desdits mouvements oscillatoires de tangage en vol ;
- à partir dudit signal de détection représentatif des mouvements oscillatoires de tangage en vol, on forme, à bord dudit hélicoptère, un signal de contrôle du tangage en vol dont la fréquence est identique à celle dudit signal de détection représentatif des mouvements oscillatoires de tangage en vol ;
- on applique ledit signal de contrôle du tangage en vol à au moins un second organe d'actionnement disposé dans la chaîne cinématique de commande du pas cyclique des pales de ladite voilure tournante ; et
- la phase et l'amplitude dudit signal de contrôle du tangage en vol sont telles que l'action dudit second organe d'actionnement sur ledit pas cyclique résulte en l'apparition d'un ensemble de forces et de moments engendrés par la voilure tournante et s'opposant, en tangage et en vol, à l'effet desdites oscillations à caractère divergent sur le fuselage.

5. Dispositif pour la réduction des oscillations à caractère divergent induites dans le fuselage (2) d'un hélicoptère (1) par sa voilure tournante (3) en rotation, ledit hélicoptère reposant sur le sol par l'intermédiaire de son atterrisseur (5),
caractérisé en ce qu'il comporte :
- des moyens (17,18) pour détecter les mouvements de roulis, au sol, du fuselage dudit hélicoptère et pour engendrer un signal de détection représentatif desdits mouvements de roulis au sol ;
- des moyens (19,20) disposés à bord dudit hélicoptère et engendrant, à partir dudit signal de détection représentatif des mouvements de roulis au sol, un signal de contrôle du roulis au sol dont la fréquence est identique à celle dudit signal de détection représentatif des mouvements de roulis au sol ; et
- au moins un premier actionneur (12,13,21) auquel est appliqué ledit signal de contrôle du roulis au sol et qui est disposé dans la chaîne cinématique de commande du pas cyclique des pales de la voilure tournante ;
- la phase et l'amplitude dudit signal de contrôle du roulis au sol étant telles que l'action dudit premier actionneur sur ledit pas cyclique résulte en l'apparition d'un ensemble de forces et de moments engendrés par la voilure tournante et s'opposant, en roulis et au sol, à l'effet desdites oscillations à caractère divergent sur le fuselage.

6. Dispositif selon la revendication 5,
caractérisé en ce qu'il comporte, de plus :
- des moyens (17,18) pour détecter les mouvements de tangage, au sol, du fuselage (2) dudit hélicoptère et pour engendrer un signal de détection représentatif desdits mouvements de tangage au sol ;
- des moyens disposés à bord dudit hélicoptère et engendrant, à partir dudit signal de détection représentatif des mouvements de tangage au sol, un signal de contrôle du tangage au sol dont la fréquence est identique à celle dudit signal de détection représentatif des mouvements de tangage au sol ; et
- au moins un second actionneur (12,13,21) auquel est appliqué ledit signal de contrôle du tangage au sol et qui est disposé dans la chaîne cinématique de commande du pas cyclique des pales de la voilure tournante ;
- la phase et l'amplitude dudit signal de contrôle du tangage au sol étant telles que l'action dudit second actionneur sur ledit pas cyclique résulte en l'apparition d'un ensemble de forces et de moments engendrés par la voilure tournante et s'opposant, en tangage et au sol, à l'effet desdites oscillations à caractère divergent sur le fuselage.

7. Dispositif pour la réduction des oscillations induites dans le fuselage (2) d'un hélicoptère par sa voilure tournante (3) en rotation, ledit hélicoptère étant suspendu audit rotor, dispositif comportant :
a′) des moyens pour détecter les mouvements oscillatoires du fuselage dudit hélicoptère en vol et pour engendrer un signal de détection représentatif desdits mouvements oscillatoires en vol ;
b′) des moyens (19,20) disposés à bord dudit hélicoptère et engendrant, à partir dudit signal de détection représentatif des mouvements oscillatoires en vol, un signal de contrôle des oscillations en vol dont la fréquence est identique à celle dudit signal de détection représentatif desdits mouvements oscillatoires en vol ; et
c′) un premier organe d'actionnement (12,13,21) destiné par son action à contrecarrer lesdites oscillations induites, et auquel est appliqué ledit signal de contrôle des oscillations en vol,
caractérisé en ce que :
- les moyens (17,18) spécifiés sous a′) détectent les mouvements oscillatoires de roulis dudit fuselage (2) et engendrent un signal de détection représentatif desdits mouvements oscillatoires de roulis en vol, de sorte que ledit signal de contrôle des oscillations en vol spécifié sous b′) est un signal de contrôle de roulis en vol ;
- ledit premier organe d'actionnement (12,13,21) est disposé dans la chaîne cinématique de commande du pas cyclique des pales de ladite voilure tournante ; et
- la phase et l'amplitude dudit signal de contrôle de roulis en vol sont telles que l'action dudit premier organe d'actionnement sur ledit pas cyclique résulte en l'apparition d'un ensemble de forces et de moments engendrés par la voilure tournante et s'opposant, en roulis et en vol, à l'effet desdites oscillations à caractère divergent sur le fuselage.

8. Dispositif selon la revendication 7,
caractérisé en ce qu'il comporte de plus :
- des moyens (17,18) pour détecter les mouvements oscillatoires de tangage du fuselage en vol et pour engendrer un signal de détection représentatif desdits mouvements oscillatoires de tangage en vol ;
- des moyens (19,20) disposés à bord dudit hélicoptère et engendrant, à partir dudit signal de détection représentatif des mouvements oscillatoires de tangage en vol, un signal de contrôle du tangage en vol dont la fréquence est identique à celle dudit signal de détection représentatif des mouvements oscillatoires de tangage en vol ; et
- au moins un second organe d'actionnement auquel est appliqué ledit signal de contrôle du tangage en vol et qui est disposé dans la chaîne cinématique de commande du pas cyclique des pales de ladite voilure tournante ;
- la phase et l'amplitude dudit signal de contrôle du tangage en vol étant telles que l'action dudit second organe d'actionnement sur ledit pas cyclique résulte en l'apparition d'un ensemble de forces et de moments engendrés par ladite voilure tournante et s'opposant, en tangage et en vol, à l'effet desdites oscillations à caractère divergent sur le fuselage.

9. Dispositif selon l'une quelconque des revendications 5 à 8,
caractérisé en ce que lesdits actionneurs et organes d'actionnement sont constitués par des vérins (13) commandant les servocommandes (12) de commande de pas, en parallèle sur la commande de pilotage (15).

10. Dispositif selon l'une quelconque des revendications 5 à 8,
caractérisé en ce que lesdits actionneurs et organes d'actionnement sont constitués par des servocommandes additionnelles (21) montées en série avec les servocommandes principales (12) de commande de pas.

11. Dispositif selon l'une quelconque des revendications 5 à 8,
caractérisé en ce que lesdits actionneurs et organes d'actionnement sont constitués par les servocommandes (12) de commande de pas.

12. Hélicoptère,
caractérisé en ce qu'il comporte le dispositif spécifié sous l'une quelconque des revendications 5 à 11, pour la réduction des oscillations à caractère divergent induites dans son fuselage (2) par sa voilure (3) en rotation.

## Claims

1. Method for the reduction of the oscillations of a divergent nature induced in the fuselage (2) of a helicopter (1) by its rotary wings (3) when they are turning, said helicopter resting on the ground by means of its landing gear (5), characterized in that:
- the roll movements of the fuselage of said helicopter on the ground are detected (at 17, 18), and a detection signal is generated which is representative of said roll movements on the ground;
- on the basis of said detection signal which is representative of the roll movements on the ground, there is formed (at 20), on board said helicopter, a signal for roll control on the ground whose frequency is identical to that of said detection signal which is representative of the roll movements on the ground;
- said signal for roll control on the ground is applied to at least one first actuator (13, 12, 21) arranged in the kinematic control chain for the cyclic pitch of the blades (4) of said rotary wings (3); and
- the phase and the amplitude of said signal for roll control on the ground are such that the action of said first actuator on said cyclic pitch results in the appearance of a set of forces and moments generated by the rotary wings and opposing, in roll and on the ground, the effect of said oscillations of a divergent nature on the fuselage.

2. Method according to Claim 1, characterized in that, moreover:
- the pitch movements of the fuselage of said helicopter on the ground are detected, and a detection signal is generated which is representative of said pitch movements on the ground;
- on the basis of said detection signal which is representative of the pitch movements on the ground, there is formed, on board said helicopter, a signal for pitch control on the ground whose frequency is identical to that of said detection signal which is representative of the pitch movements on the ground;
- said signal for pitch control on the ground is applied to at least one second actuator arranged in the kinematic control chain for the cyclic pitch of the blades of said rotary wings; and
- the phase and the amplitude of said signal for pitch control on the ground are such that the action of said second actuator on said cyclic pitch results in the appearance of a set of forces and moments generated by the rotary wings and opposing, in pitch and on the ground, the effect of said oscillations of a divergent nature on the fuselage.

3. Method for the reduction of the oscillations induced in the fuselage of a helicopter by its rotary wings when they are turning, said helicopter being suspended by said rotor, a method according to which:
a) the oscillatory movements of the fuselage of said helicopter are detected in flight and at least one detection signal is generated which is representative of said oscillatory movements in flight;
b) on the basis of said detection signal which is representative of the oscillatory movements in flight, there is formed, on board said helicopter, a signal for control of the oscillations in flight whose frequency is identical to that of said detection signal which is representative of said oscillatory movements in flight; and
c) said signal for control of the oscillations in flight is applied to at least one first actuating member intended, by its action, to counteract said induced oscillations, characterized in that:
- in operation a), the oscillatory roll movements of said fuselage are detected and a detection signal which is representative of said oscillatory roll movements in flight is generated, such that, in operation b), said signal for control of the oscillations in flight is a signal for roll control in flight;
- in operation c), said first actuating member is arranged in the kinematic control chain for the cyclic pitch of the blades of said rotary wings; and
- the phase and the amplitude of said signal for roll control in flight are such that the action of said first actuating member on said cyclic pitch results in the appearance of a set of forces and moments generated by the rotary wings and opposing, in roll and in flight, the effect of said oscillations of a divergent nature on the fuselage.

4. Method according to Claim 3, characterized in that, moreover:
- the pitch oscillatory movements of the fuselage are detected in flight and a detection signal is generated which is representative of said pitch oscillatory movements in flight;
- on the basis of said detection signal which is representative of the pitch oscillatory movements in flight, there is formed, on board said helicopter, a signal for pitch control in flight whose frequency is identical to that of said detection signal which is representative of the pitch oscillatory movements in flight;
- said signal for pitch control in flight is applied to at least one second actuating member arranged in the kinematic control chain for the cyclic pitch of the blades of said rotary wings; and
- the phase and the amplitude of said signal for pitch control in flight are such that the action of said second actuating member on said cyclic pitch results in the appearance of a set of forces and moments generated by the rotary wings and opposing, in pitch and in flight, the effect of said oscillations of a divergent nature on the fuselage.

5. Device for the reduction of the oscillations of a divergent nature induced in the fuselage (2) of a helicopter (1) by its rotary wings (3) when they are turning, said helicopter resting on the ground by means of its landing gear (5), characterized in that it comprises:
- means (17, 18) for detecting the roll movements, on the ground, of the fuselage of said helicopter and for generating a detection signal which is representative of said roll movements on the ground;
- means (19, 20) arranged on board said helicopter and generating, on the basis of said detection signal which is representative of the roll movements on the ground, a signal for roll control on the ground whose frequency is identical to that of said detection signal which is representative of the roll movements on the ground; and
- at least one first actuator (12, 13, 21) to which said signal for roll control on the ground is applied and which is arranged in the kinematic control chain for the cyclic pitch of the blades of the rotary wings;
- the phase and the amplitude of said signal for roll control on the ground being such that the action of said first actuator on said cyclic pitch results in the appearance of a set of forces and moments generated by the rotary wings and opposing, in roll and on the ground, the effect of said oscillations of a divergent nature on the fuselage.

6. Device according to Claim 5, characterized in that it comprises, moreover:
- means (17, 18) for detecting the pitch movements, on the ground, of the fuselage (2) of said helicopter and for generating a detection signal which is representative of said pitch movements on the ground;
- means arranged on board said helicopter and generating, on the basis of said detection signal which is representative of the pitch movements on the ground, a signal for pitch control on the ground whose frequency is identical to that of said detection signal which is representative of the pitch movements on the ground; and
- at least one second actuator (12, 13, 21) to which said signal for pitch control on the ground is applied and which is arranged in the kinematic control chain for the cyclic pitch of the blades of the rotary wings;
- the phase and the amplitude of said signal for pitch control on the ground being such that the action of said second actuator on said cyclic pitch results in the appearance of a set of forces and moments generated by the rotary wings and opposing, in pitch and on the ground, the effect of said oscillations of a divergent nature on the fuselage.

7. Device for the reduction of the oscillations induced in the fuselage (2) of a helicopter by its rotary wings (3) when they are turning, said helicopter being suspended by said rotor, a device comprising:
a') means for detecting the oscillatory movements of the fuselage of said helicopter in flight and for generating a detection signal which is representative of said oscillatory movements in flight;
b') means (19, 20) arranged on board said helicopter and generating, on the basis of said detection signal which is representative of the oscillatory movements in flight, a signal for control of the oscillations in flight whose frequency is identical to that of said detection signal which is representative of said oscillatory movements in flight; and
c') a first actuating member (12, 13, 21) intended by its action to counteract said induced oscillations, and to which said signal for control of the oscillations in flight is applied,
characterized in that:
- the means (17, 18) specified under a') detect the roll oscillatory movements of said fuselage (2) and generate a detection signal which is representative of said roll oscillatory movements in flight, such that said signal for control of the oscillations in flight specified under b') is a signal for roll control in flight;
- said first actuating member (12, 13, 21) is arranged in the kinematic control chain for the cyclic pitch of the blades of said rotary wings; and
- the phase and the amplitude of said signal for roll control in flight are such that the action of said first actuating member on said cyclic pitch results in the appearance of a set of forces and moments generated by the rotary wings and opposing, in roll and in flight, the effect of said oscillations of a divergent nature on the fuselage.

8. Device according to Claim 7, characterized in that it comprises, moreover:
- means (17, 18) for detecting the pitch oscillatory movements of the fuselage in flight and for generating a detection signal which is representative of said pitch oscillatory movements in flight;
- means (19, 20) arranged on board said helicopter and generating, on the basis of said detection signal which is representative of the pitch oscillatory movements in flight, a signal for control of the pitch in flight whose frequency is identical to that of said detection signal which is representative of the pitch oscillatory movements in flight; and
- at least one second actuating member to which said signal for pitch control in flight is applied and which is arranged in the kinematic control chain for the cyclic pitch of the blades of said rotary wings;
- the phase and the amplitude of said signal for pitch control in flight being such that the action of said second actuating member on said cyclic pitch results in the appearance of a set of forces and moments generated by said rotary wings and opposing, in pitch and in flight, the effect of said oscillations of a divergent nature on the fuselage.

9. Device according to any one of Claims 5 to 8, characterized in that said actuators and actuating members are constituted by jacks (13) controlling the servocontrols (12) for pitch control, in parallel with the piloting control (15).

10. Device according to any one of Claims 5 to 8, characterized in that said actuators and actuating members are constituted by additional servocontrols (21) mounted in series with the main servocontrols (12) for pitch control.

11. Device according to any one of Claims 5 to 8, characterized in that said actuators and actuating members are constituted by the servocontrols (12) for pitch control.

12. Helicopter, characterized in that it comprises the device specified under any one of Claims 5 to 11 for the reduction of the oscillations of a divergent nature induced in its fuselage (2) by its wings (3) when they are turning.

## Patentansprüche

1. Verfahren zur Reduzierung der in den Rumpf (2) eines Hubschraubers (1) durch dessen rotierende Tragschraube (3) induzierten divergenten Schwingungen, wenn sich der Hubschrauber mit seinem Fahrwerk (5) auf dem Boden befindet,
dadurch gekennzeichnet, daß:
- (in 17,18) die Boden-Rollbewegungen des Hubschrauberrumpfs erfaßt und ein für die Boden-Rollbewegungen repräsentatives Erfassungssignal erzeugt wird;
- aus dem für die Boden-Rollbewegungen repräsentativen Erfassungssignal (in 20) an Bord des Hubschraubers ein Boden-Rollkontrollsignal gebildet wird, dessen Frequenz mit der des für die Boden-Rollbewegungen repräsentativen Erfassungssignals identisch ist;
- das Boden-Rollkontrollsignal wenigstens einem ersten Wirkglied (13,12,21) in der kinematischen Steuerkette der zyklischen Verstellung der Blätter (4) der Tragschraube (3) aufgegeben wird und
- Phase und Amplitude des Boden-Rollkontrollsignals derart sind, daß die Wirkung des ersten Wirkgliedes auf die zyklische Verstellung in der Erzeugung eines Komplexes von Kräften und Momenten durch die Tragschraube resultiert, die bei Rollbewegungen am Boden der Auswirkung der divergenten Schwingungen auf den Rumpf entgegenwirken.

2. Verfahren nach Anspruch 1,
dadurch gekennzeichnet, daß außerdem:
- die Nickbewegungen des Hubschrauberrumpfes am Boden erfaßt werden und ein für die Boden-Nickbewegungen repräsentatives Erfassungssignal erzeugt wird;
- aus dem für die Boden-Nickbewegungen repräsentativen Erfassungssignal an Bord des Hubschraubers ein Boden-Nickkontrollsignal gebildet wird, dessen Frequenz mit der des für die Boden-Nickbewegungen repräsentativen Erfassungssignals identisch ist;
- das Boden-Nickkontrollsignal wenigstens einem zweiten Wirkglied in der kinematischen Steuerkette der zyklischen Verstellung der Tragschraubenblätter aufgegeben wird und
- Phase und Amplitude des Boden-Nickkontrollsignals derart sind, daß die Wirkung des zweites Wirkgliedes auf die zyklische Verstellung in der Erzeugung eines Komplexes von Kräften und Momenten durch die Tragschraube resultiert, die bei Nickbewegungen am Boden der Auswirkung der divergenten Schwingungen auf den Rumpf entgegenwirken.

3. Verfahren zur Reduzierung der in den Rumpf eines Hubschraubers durch dessen rotierende Tragschraube induzierten Schwingungen, wobei der Hubschrauber am Rotor aufgehängt ist, nach dem:
a) die Schwingungen des Hubschrauberrumpfes während des Fluges erfaßt werden und wenigsten ein für die Schwingungen während des Fluges repräsentatives Erfassungssignal erzeugt wird;
b) aus dem für die Schwingungen während des Fluges repräsentativen Erfassungssignal an Bord des Hubschraubers ein Flug-Schwingungskontrollsignal gebildet wird, dessen Frequenz mit der des für die Schwingungen während des Fluges repräsentativen Erfassungssignals identisch ist, und
c) das Flug-Schwingungskontrollsignal wenigstens einem ersten Betätigungsorgan aufgegeben wird, das den induzierten Schwingungen entgegenwirken soll,
dadurch gekennzeichnet, daß:
- in Phase a) die Rollschwingungen des Rumpfes erfaßt werden und ein für die Flug-Rollschwingungen repräsentatives Erfassungssignal erzeugt wird, so daß das Flug-Schwingungskontrollsignal in Phase b) ein Flug-Rollkontrollsignal ist;
- in Phase c) das erste Betätigungsorgan in der kinematischen Steuerkette der zyklischen Verstellung der Tragschraubenblätter angeordnet ist und
- Phase und Amplitude des Flug-Rollkontrollsignals derart sind, daß die Wirkung des ersten Betätigungsorgans auf die zyklische Verstellung in der Erzeugung eines Komplexes von Kräften und Momenten durch die Tragschraube resultiert, die bei Flug-Rollbewegungen der Auswirkung der divergenten Schwingungen auf den Rumpf entgegenwirken.

4. Verfahren nach Anspruch 3,
dadurch gekennzeichnet, daß außerdem:
- die Nickschwingungen des Rumpfes während des Fluges erfaßt werden und ein für die Flug-Nickschwingungen repräsentatives Erfassungssignal erzeugt wird;
- aus dem für die Flug-Nickschwingungen repräsentativen Erfassungssignal an Bord des Hubschraubers ein Flug-Nickkontrollsignal gebildet wird, dessen Frequenz mit der des für die Flug-Nickschwingungen repräsentativen Erfassungssignals identisch ist;
- das Flug-Nickschwingungskontrollsignal wenigstens einem zweiten Betätigungsorgan in der kinematischen Steuerkette der zyklischen Verstellung der Tragschraubenblätter aufgegeben wird und
- Phase und Amplitude des Flug-Nickkontrollsignals derart sind, daß die Wirkung des zweiten Betätigungsorgans auf die zyklische Verstellung in der Erzeugung eines Komplexes von Kräften und Momenten resultiert, die bei Nickbewegungen während des Fluges der Auswirkung der divergenten Schwingungen auf den Rumpf entgegenwirken.

5. Vorrichtung zur Reduzierung der in den Rumpf (2) eines Hubschraubers (1) durch dessen rotierende Tragschraube (3) induzierten divergenten Schwingungen, wobei sich der Hubschrauber mit seinem Fahrwerk (5) auf dem Boden befindet,
dadurch gekennzeichnet, daß sie umfaßt:
- Mittel (17,18) zur Erfassung der Rollbewegungen des Hubschrauberrumpfes am Boden und zur Erzeugung eines für die Rollbewegungen am Boden repräsentativen Erfassungssignals;
- Mittel (19,20) an Bord des Hubschraubers, um aus dem für die Rollbewegungen am Boden repräsentativen Erfassungssignal ein Boden-Rollkontrollsignal zu erzeugen, dessen Frequenz mit der des für die Rollbewegungen am Boden repräsentativen Erfassungssignals identisch ist, und
- wenigstens ein erstes Wirkglied (12,13,21), dem das Boden-Rollkontrollsignal aufgegeben wird und das in der kinematischen Steuerkette der zyklischen Verstellung der Tragschraubenblätter angeordnet ist;
- wobei Phase und Amplitude des Boden-Rollkontrollsignals derart sind, daß die Wirkung des ersten Wirkglieds auf die zyklische Verstellung in der Erzeugung eines Komplexes von Kräften und Momenten durch die Tragschraube resultiert, die bei Rollbewegungen am Boden der Auswirkung der divergenten Schwingungen auf den Rumpf entgegenwirken.

6. Vorrichtung nach Anspruch 5,
dadurch gekennzeichnet, daß sie außerdem umfaßt:
- Mittel (17,18) zur Erfassung der Nickbewegungen des Rumpfes (2) des Hubschraubers am Boden und zur Erzeugung eines für die Nickbewegungen am Boden repräsentativen Erfassungssignals;
- Mittel an Bord des Hubschraubers, um aus dem für die Nickbewegungen am Boden repräsentativen Erfassungssignal ein Boden-Nickkontrollsignal zu erzeugen, dessen Frequenz mit der des für die Nickbewegungen am Boden repräsentativen Erfassungssignals identisch ist, und
- wenigstens ein zweites Wirkglied (12,13,21), dem das Boden-Nickkontrollsignal aufgegeben wird und das in der kinematischen Steuerkette der zyklischen Verstellung der Tragschraubenblätter angeordnet ist,
- wobei Phase und Amplitude des Boden-Nickkontrollsignals derart sind, daß die Wirkung des zweiten Wirkgliedes auf die zyklische Verstellung in der Erzeugung eines Komplexes von Kräften und Momenten durch die Tragschraube resultiert, die bei Nickbewegungen am Boden der Auswirkung der divergenten Schwingungen auf den Rumpf entgegenwirken.

7. Vorrichtung zur Reduzierung der in den Rumpf (2) eines Hubschraubers durch dessen rotierende Tragschraube (3) induzierten Schwingungen, wobei der Hubschrauber am Rotor aufgehängt ist und die Vorrichtung umfaßt:
a') Mittel zur Erfassung der Schwingungen des Hubschrauberrumpfes während des Fluges und zur Erzeugung eines für die Schwingungen während des Fluges repräsentativen Erfassungssignals;
b') Mittel (19,20) an Bord des Hubschraubers, um aus dem für die Schwingungen während des Fluges repräsentativen Erfassungssignal ein Flug-Schwingungskontrollsignal zu erzeugen, dessen Frequenz mit der des für die Schwingungen während des Fluges repräsentativen Signals identisch ist, und
c') ein erstes Betätigungsorgan (12,13,21), das den induzierten Schwingungen entgegenwirken soll und dem das Flug-Schwingungskontrollsignal aufgegeben wird,
dadurch gekennzeichnet, daß:
- die unter a') genannten Mittel (17,18) die Rollschwingungen des Rumpfes (2) erfassen und ein für die Flug-Rollschwingungen repräsentatives Erfassungssignal erzeugen, so daß das unter b') genannte Flug-Schwingungskontrollsignal ein Flug-Rollkontrollsignal ist;
- das erste Betätigungsorgan (12,13,21) in der kinematischen Steuerkette der zyklischen Verstellung der Tragschraubenblätter angeordnet ist, und
- Phase und Amplitude des Flug-Rollkontrollsignals derart sind, daß die Wirkung des ersten Betätigungsorgans auf die zyklische Verstellung in der Erzeugung eines Komplexes von Kräften und Momenten durch die Tragschraube resultiert, die bei Rollbewegungen während des Fluges der Auwirkung der divergenten Schwingungen auf den Rumpf entgegenwirken.

8. Vorrichtung nach Anspruch 7,
dadurch gekennzeichnet, daß sie außerdem umfaßt:
- Mittel (17,18) zur Erfassung der Nickschwingungen des Rumpfes während des Fluges und zur Erzeugung eines für die Nickschwingungen während des Fluges repräsentativen Erfassungssignals;
- Mittel (19,20) an Bord des Hubschraubers, um aus dem für die Nickschwingungen während des Fluges repräsentativen Erfassungssignal ein Flug-Nickkontrollsignal zu erzeugen, dessen Frequenz mit der des für die Nickschwingungen während des Fluges repräsentativen Erfassungssignals identisch ist, und
- wenigstens ein zweites Betätigungsorgan, dem das Flug-Nickkontrollsignal aufgegeben wird und das in der kinematischen Steuerkette der zyklischen Verstellung der Tragschraubenblätter angeordnet ist,
- wobei Phase und Amplitude des Flug-Nickkontrollsignals derart sind, daß die Wirkung des zweiten Betätigungsorgans auf die zyklische Verstellung in der Erzeugung eines Komplexes von Kräften und Momenten durch die Tragschraube resultiert, die bei Nickbewegungen während des Fluges der Auswirkung der divergenten Schwingungen auf den Rumpf entgegenwirken.

9. Vorrichtung nach einem der Ansprüche 5 bis 8,
dadurch gekennzeichnet, daß die Wirkglieder und Betätigungsorgane Stellglieder (13) sind, die die Servosteuerungen (12) der Verstellung parallel zur Führung des Hubschraubers (15) steuern.

10. Vorrichtung nach einem der Ansprüche 5 bis 8,
dadurch gekennzeichnet, daß die Wirkglieder und Betätigungsorgane aus zusätzlichen Servosteuerungen (21) bestehen, die mit den Hauptservosteuerungen (12) der Blattverstellung in Reihe angeordnet sind.

11. Vorrichtung nach einem der Ansprüche 5 bis 8,
dadurch gekennzeichnet, daß die Wirkglieder und Betätigungsorgane aus Servosteuerungen (12) für die Blattverstellung bestehen.

12. Hubschrauber,
dadurch gekennzeichnet, daß er die unter einem der Ansprüche 5 bis 11 dargelegte Vorrichtung zur Reduzierung der in seinen Rumpf (2) durch seine rotierende Tragschraube (3) induzierten divergenten Schwingungen umfaßt.
